# EUROPEAN PATENT APPLICATION

(11) **EP 3 330 911 A1**
(43) Date of publication of application: **06.06.2018**
(21) Application number: 16202043.2
(22) Date of filing: 02.12.2016
(51) Int. Cl.: G06Q 10/10

(54) **METHOD AND SYSTEM FOR APPLYING TO A JOB OFFER**

(71) Applicant: StepStone GmbH, 10969 Berlin (DE)
(72) Inventor: Burns, Oliver Dougal, London, Greater London N3 2HN (GB)
(74) Representative: Brantsandpatents bvba

(57) **Abstract**

The invention provides a system and a method for applying to a job offer. The system comprises a user web browser in which user's data is entered by the applicant, the user web browser is connected to a job board comprising a database in which the entered user's data is stored, the job board is connected to an integration means and an applicant tracking system (ATS), wherein the user uploads the user's data onto the user web browser in the beginning of the application process and the user's data stored in the database of the job board is made available to a plurality of job offers; said ATS comprises a comparison means for comparing the stored user's data to the job offer requirements thereby obtaining a comparison result and a response provision means for providing the comparison result to the user web browser.

## Description

### Field of the invention

The present invention relates a method, in particular a computer implemented method, and a system for applying to a job offer.

### Background

The use of mobile devices for job seeking is increasing rapidly but the job application user experience for mobile devices can be difficult and frustrating. Feedback shows that one of the biggest issues for job seekers is that when they are sent from the job board, wherein they have already provided application information, to an applicant tracking system apply page they are expected to provide the same information again. This results in job seekers abandoning the application process and a poor conversion rate for customers who use an ATS service. With over 50% of applications coming from mobile devices, there is an expectation for jobseekers to load their curriculum vitae (CV) from their mobile device. This is not easy as most jobseekers do not have CV's stored in their mobile device or in the cloud, therefore there is a large drop-off as a result of this mandatory process.

There is a need for a simplified method and system that allows the job seeker to continue with the application process for a job offer. It is the goal of the invention to provide a solution to the mentioned problem.

### Summary

The present invention provides a system for applying to a job offer comprising a user web browser in which user's data is entered by the applicant, the user web browser is connected to a job board comprising a database in which the user's data is stored, the job board is connected to an integration means and an applicant tracking system (ATS), wherein the user uploads the user's data onto the user web browser in the beginning of the application process, said ATS comprises a comparison means for comparing the stored user's data to the job offer requirements thereby obtaining a comparison result and a response provision means for providing the comparison result to the user web browser wherein the user's data stored in the database of the job board is made available to a plurality of job offers.

In a second aspect, the invention provides a method for applying to a job offer comprising the following steps:
a) transferring user's data from a user web browser to a job board comprising a database,
b) storing the user's data within the database of said job board,
c) converting the stored user's data to a standardized JSON format by the job board,
d) transferring the converted user's data from the board to an integration means,
e) converting the standardized JSON user application data to an outgoing JSON format by the integration means,
f) transferring the converted user's data from the integration means to an ATS for tracking job applications,
g) assessing the user's data with regard to the job offer requirement by the ATS,
h) issuing a response of the assessment by the ATS,
i) transferring the response from the ATS to the user web browser via the integration means and the job board,
j) redirecting the user web browser to the ATS if further user's data is required to complete a job application,
wherein the user's data which is uploaded onto the user web browser is available for a plurality of job offers.

The method according to any embodiment of the present invention is advantageous as it provides the user or the job seeker with a simplified process of applying to a job offer. The invention allows transferring the application information captured by the job board to the ATS thereby enable the ATS to pre-fill the application form or page with the job seeker's profile data and CV. This results in increased application conversion rates for customers who use an ATS service. The job seekers will be more compelled to continue with their application for a job offer if the ATS apply form has been prefilled. The job seeker will be provided with a prefilled job application form or will be invited to partly fill in said form by completing some missing information or data.

### Description of the figures

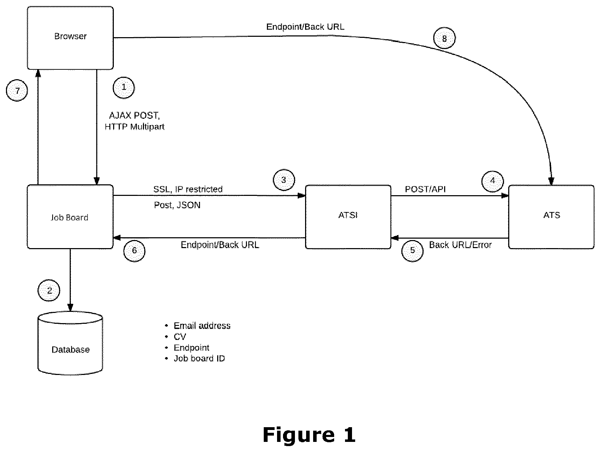

**FIG. 1** is a flow diagram illustrating the method and the system according to an embodiment of the invention.

### Detailed description of the invention

The present invention relates to a method, in particular a computer implemented method and a system for applying to a job offer.

As used herein, the following terms have the following meanings:
"A", "an", and "the" as used herein refers to both singular and plural referents unless the context clearly dictates otherwise. By way of example, "a curriculum vitae" refers to one or more than one curriculum vitae.

"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The term "curriculum vitae" or "resume" as used herein is to be understood as a summary of a job candidate his/her backgrounds, skills, job experience, education, qualifications, etc. Preferably, said summary comprises a collection of information from an individual or job candidate his/her backgrounds, skills, career path, career expectation, job experience, education, qualifications, etc. The term "curriculum vitae" or "resume" as used herein could preferably also be understood as a profile on a professional network.

The term "web browser" as used herein is preferably to be understood as a website dealing with curriculum vitaes, a website of a professional network dealing with profiles, a website of an interim or staff agency, or the like, which curriculum vitaes or profiles comprise a collection of information from an individual or job candidate his/her backgrounds, skills, career path, career expectation, job experience, education, qualifications, etc. Said website is preferably displayable on a computing device, which could be a desktop computer, laptop computer or a mobile device, such as a tablet computer or smart phone.

In a first aspect the present invention provides a system for applying to a job offer comprising a user web browser in which user's data is entered by the applicant, the user web browser is connected to a job board comprising a database in which the entered user's data is stored, the job board is connected to an integration means and an applicant tracking system (ATS), wherein the user uploads the user's data onto the user web browser in the beginning of the application process and the user's data stored in the database of the job board is made available to a plurality of job offers; said ATS comprises a comparison means for comparing the stored user's data to the job offer requirements thereby obtaining a comparison result and a response provision means for providing the comparison result to the user web browser.

In a preferred embodiment, the comparison result provided to the user web browser comprises a message to the user and/or prefilled application form which can be used by the user for applying to the job. The comparison result further comprises an indication of the missing data that needs to be completed by the user to apply to said job. The message to the user provides information on the success status and/or the completion of the job application.

The system facilitates a job application process for a user. The user uploads user's data onto the user web browser in the beginning of the job application process. Preferably, the user's data is made available for a plurality, preferably for an unlimited number of job offers by storing the user application data in the database of the board. A comparison of the originally filed user's data to the requirements of a job offer is carried out by the ATS after conversion of the user's data by the board and/or the integration means. The user web browser receives, afterwards, a response from the ATS indicating if the requirements of the specific job application are fulfilled. Said response is the comparison result of the originally filed user's data to the requirements of a job offer.

In a preferred embodiment, the user's data comprise a subset of business data and a subset of technical data. The subset of business data comprises personal user job application data such as but not limited to: first name, surname, age, sex, civil status = married / divorced / single, job title, current position, most recent position, salary type and/or recommended values = annual / daily / hourly / none, minimum salary range, maximum salary range, salary currency, geographic work eligibility, message to recruiter or any combination thereof. The business data might further offer the possibility to attach a cover letter and/or additional documents. The subset of technical data comprises data, preferably meta-data, selected from a group comprising board identification data, URL addresses and/or error descriptions. The technical data is used to return responses to the user.

In a preferred embodiment, the data entered by the user is made available to a plurality or to an unlimited number of job offers. This means that the user's data stored in the database can be used and/or compared to the requirements of any job offer. Preferably, the user's data is made available to a plurality of job offers in the same geographical location and/or in the same job filed.

In a preferred embodiment, the subset of business data and/or the subset of technical data are transferred from the integration means to the ATS. In a preferred embodiment, an IP address is defined by the ATS, wherein the IP address serves as a static endpoint for a specific job offer to which the subset of business data and/or the subset of technical data are transferred from the integration means and wherein the IP address is transferred from the ATS to the integration means before the transfer of the subset of business data and the subset of technical data from the integration means to the ATS.

In a preferred embodiment, the subset of business data and/or the subset of technical data are transferred from the integration means to an URL address of a job offer page as an endpoint for the job offer.

In a preferred embodiment, the subset of business data and/or the subset of technical data are compared to the requirements of a job offer. If one or more requirement is matching the user's data, then an application for said job offer is prefilled and provided to the user. Preferably, the user is provided with a list or a percentage of data that are matching the job offer requirement. This enables the user to quickly recognize the relevance of the job offer.

In a second aspect, the invention provides a method for applying to a job offer comprising the following steps:
a) transferring user's data from a user web browser to a job board comprising a database,
b) storing the user's data within the database of said job board,
c) converting the stored user's data to a standardized JSON format by the job board,
d) transferring the converted user's data from the board to an integration means,
e) converting the standardized JSON user application data to an outgoing JSON format by the integration means,
f) transferring the converted user's data from the integration means to an ATS for tracking job applications,
g) assessing the user's data with regard to the job offer requirement by the ATS,
h) issuing a response of the assessment by the ATS,
i) transferring the response from the ATS to the user web browser via the integration means and the job board,
j) redirecting the user web browser to the ATS if further user's data is required to complete a job application,
wherein the user's data which is uploaded onto the user web browser is available for a plurality of job offers.

The different steps of the method are shown in figure 1:
1. the job seeker of the user sends their application information to a job board,
2. the information is stored in the job board database,
3. after converting application information to standardised JSON format, the job board sends the data to the integration means (ATSi).
4. ATSi converts the data to an outgoing JSON format and sends it to the ATS,
5. The ATS responds either with a success message if application can be completed using just the Job Board data, BackUrl to redirect the jobseeker to a pre-filled version of the apply page or with an error message if an error occurs,
6. ATSi transfers the response to the Job Board,
7. the job board sends a respond to the user's browser,
8. the browser is redirected to the ATS page. In this scenario the browser waits for all above steps to be completed. It enables the ATS to pre-populate or pre-fill the apply page with the data acquired from the user.

In a preferred embodiment, the success message indicates that the application to the job offer can be completed using the transferred user's data; the application to the job offer is incomplete and provides a direction message which directs the user to a pre-filled version of the application to the job offer; or an error in the application to the job offer has occurred and provides a correspondent error message. If an error occurs, the user is directed to a standard job URL. This ensures that all relevant job offers will be notified to the user thereby avoiding that a job offer remains unseen by said user.

Wherein the application to the job offer can be completed using the transferred user's data; said data is retrieved from the user's data saved in the databank of the job board. Preferably the user is provided with the completed application and is invited to confirm that he wishes to apply for the job offer. The user might be invited to react on at least one a call-to-action element.

The term "call-to-action element" is used herein to refer to elements in a web page that solicit an action from the user. By preference said call-to-action elements are clickable buttons. These buttons can be clicked on and when clicked, an action is performed. The call-to-action element might be a save-button or an apply-button.

In a preferred embodiment, the user web browser is redirected to the ATS, if further user's data is required to complete an application to a job offer.

Whether the job offer application page is completely prefilled or additional information is required from the user, said application page is available for a pre-determined time, preferably of at least 8 hours, preferably at least 16 hours, more preferably at least 24 hours. Said page is available for at most 48 hours, preferably at most 72h, most preferably at most 96 hours.

In a preferred embodiment, the ATS provides to the user a pre-filled version of a specific job offer application page, wherein the pre-filled data corresponds to the originally filed and saved user's data.

In a preferred embodiment, the JSON format comprises compulsory data elements selected from a group comprising header, body, email, curriculum vitae, file type, binary data, board id, board name, original URL and/or effective URL. Preferably, the original URL or effective URL enables the ATS to identify a job offer including job identity, job title and offering company.

In a preferred embodiment, the JSON format comprises optional data elements selected from a group comprising first name, surname, job title, salary type, salary range minimum, salary range maximum, salary currency, work eligibility, cover letter, message to recruiter and/or additional documents.

It is to be understood that all embodiments of the system apply to and/or form part of the method of the invention. Similarly, all embodiments of the method apply to and/or form part of the system of the invention.

Although the present invention has been described with reference to preferred embodiments thereof, many modifications and alternations may be made by a person having ordinary skill in the art without departing from the scope of this invention which is defined by the appended claims.

## Claims

1. System for applying to a job offer comprising a user web browser in which user's data is entered by the applicant, the user web browser is connected to a job board comprising a database in which the entered user's data is stored, the job board is connected to an integration means and an applicant tracking system (ATS), wherein the user uploads the user's data onto the user web browser in the beginning of the application process and the user's data stored in the database of the job board is made available to a plurality of job offers; said ATS comprises a comparison means for comparing the stored user's data to the job offer requirements thereby obtaining a comparison result and a response provision means for providing the comparison result to the user web browser.

2. System according to claim 1 wherein the comparison result comprises information on the success status and/or the completion of the job application.

3. System according to any of claims 1-2 wherein the user's data comprises a subset of business data comprising personal user job application data.

4. System according to any of the preceding claims wherein the user's data further comprises a subset of technical data comprising data, preferably meta-data, selected from a group comprising board identification data, URL addresses and/or error descriptions.

5. System according to any of the preceding claims wherein the subset of business data and the subset of technical data are transferred from the integration means to the ATS.

6. System according to any of the preceding claims wherein an IP address is defined by the ATS, wherein the IP address serves as a static endpoint for a specific job application to which the subset of business data and the subset of technical data are transferred from the integration means and wherein the IP address is transferred from the ATS to the integration means before the transfer of the subset of business data and the subset of technical data from the integration means to the ATS.

7. System according to any of the preceding claims wherein the subset of business data and the subset of technical data are transferred from the integration means to an URL address of a job offer page as an endpoint for the job offer.

8. A method for applying to a job offer comprising the following steps:
k) transferring user's data from a user web browser to a job board comprising a database,
l) storing the user's data within the database of said job board,
m) converting the stored user's data to a standardized JSON format by the job board,
n) transferring the converted user's data from the board to an integration means,
o) converting the standardized JSON user application data to an outgoing JSON format by the integration means,
p) transferring the converted user's data from the integration means to an ATS for tracking job applications,
q) assessing the user's data with regard to the job offer requirement by the ATS,
r) issuing a response of the assessment by the ATS,
s) transferring the response from the ATS to the user web browser via the integration means and the job board,
t) redirecting the user web browser to the ATS if further user's data is required to complete a job application,
wherein the user's data which is uploaded onto the user web browser is available for a plurality of job offers.

9. The method according to claim 8 wherein the success message indicates that
- the application to the job offer can be completed using the transferred user's data, or
- the application to the job offer is incomplete and provides a direction message which directs the user to a pre-filled version of the application to the job offer, or
- an error in the application to the job offer has occurred and provides a correspondent error message.

10. The method according to any of claims 8 or 9 wherein the user web browser is redirected to the ATS, if further user's data is required to complete an application to a job offer.

11. The method according to any of claims 8-10 wherein the ATS provides a pre-filled version of a specific job application page to the user, wherein the pre-filled data corresponds to the originally filed user's data.

12. The method according to any of claims 8-11 wherein the JSON format comprises compulsory data elements selected from a group comprising header, body, email, curriculum vitae, file type, binary data, board id, board name, original URL and/or effective URL.

13. The method according to any of claims 8-12 wherein the JSON format comprises optional data elements selected from a group comprising first name, surname, job title, salary type, salary range minimum, salary range maximum, salary currency, work eligibility, cover letter, message to recruiter and/or additional documents.
